# EUROPÄISCHE PATENTSCHRIFT

(11) **EP 3 099 445 B1**
(45) Veröffentlichungstag und Bekanntmachung des Hinweises auf die Patenterteilung: **02.08.2017**
(21) Anmeldenummer: 15701114.9
(22) Anmeldetag: 13.01.2015
(51) Int. Cl.: B23K 26/0622, B23K 26/22, B23K 26/32, B23K 103/08, B23K 103/12

(54) **VERFAHREN UND VORRICHTUNG ZUM PUNKTSCHWEISSEN VON WERKSTÜCKEN INSBESONDERE AUS KUPFER, KUPFERLEGIERUNGEN, GOLD ODER SCHMUCKWERKSTOFFEN MITTELS LASERPULSEN MIT GRÜNER WELLENLÄNGE**
METHOD AND APPARATUS FOR SPOT WELDING WORKPIECES PARTICULARLY MADE OF COPPER, COPPER ALLOYS, GOLD OR JEWELLERY MATERIALS USING LASER PULSES WITH GREEN WAVELENGTH
PROCÉDÉ ET DISPOSITIF DE SOUDAGE PAR POINTS DE PIÈCES, NOTAMMENT EN CUIVRE, ALLIAGES DE CUIVRE, OR OU MATÉRIAUX D'ORFÈVRERIE, PAR IMPULSIONS LASER D'UNE LONGUEUR D'ONDE DE LA COULEUR VERTE

(30) Priorität: 31.01.2014 DE 102014201715
(43) Veröffentlichungstag der Anmeldung: 07.12.2016
(73) Patentinhaber: TRUMPF Laser GmbH, 78713 Schramberg (DE)
(72) Erfinder: KAISER, Elke Dolores, 78733 Aichhalden (DE)
(74) Vertreter: Kohler Schmid Möbus Patentanwälte
(86) Internationale Anmeldenummer: PCT/EP2015/050470
(87) Internationale Veröffentlichungsnummer: WO 2015/113811

(56) Entgegenhaltungen:
- EP-A1- 2 392 429
- JP-A- 2005 288 481
- S.-I. NAKASHIBA ET AL: "micro-welding of copper plate by frequency double diode pumped pulsed Nd.Yag laser", PHYSICS PROCEDIA, Bd. 39, 1. Januar 2012 (2012-01-01), Seiten 577-584, XP002741407, bayerisches Laserzentrum

## Beschreibung

Die vorliegende Erfindung betrifft ein Verfahren und eine Vorrichtung zum Punktschweißen von Werkstücken, insbesondere aus Kupfer, Kupferlegierungen, Gold oder Schmuckwerkstoffen, mittels Laserpulsen mit einer Wellenlänge von 500 bis 540 nm gemäß Oberbegriff von Anspruch 1 und Anspruch 11.

Ein derartiges Verfahren und eine derartige Vorrichtung sind beispielsweise durch den Artikel von S. Nakashiba et al. "Micro-welding of Copper Plate by Frequency Doubled Diode Pumped Pulsed Nd:YAG Laser", Physics Procedia, 2012, Heft 39, S. 577-584, bekannt geworden.

Die Absorption von Kupfer und Gold ist bei grünen Wellenlängen (500 bis 540 nm) höher als für die Wellenlänge gängiger Lasertypen (≥1064nm). Beim Laserschweißen von Kupfer mit Laserpulsen mit IR-Wellenlänge (1064nm) weist die Leistung der Laserpulse typischerweise einen trapezförmigen zeitlichen Pulsverlauf mit einer gerade ansteigenden Pulsflanke zur Erzeugung einer Schmelztemperatur und anschließend einer Verdampfungstemperatur in dem Werkstück, einem ebenen Pulsplateau zur Schmelzbaderzeugung mit einem Dampfkanal in dem Werkstück und einer gerade abfallenden Pulsflanke zum Beenden des Schweißvorgangs auf. Allerdings weist die geschweißte Werkstückoberfläche Schmelzspritzer auf.
Beim Laserschweißen mit sogenannten Hybridlasern wird gleichzeitig mit Laserpulsen mit IR-Wellenlänge (1064nm) und mit grüner Wellenlänge (532nm) geschweißt, um so die Energieeinkopplung in das Kupfermaterial zu verbessern.
Für sogenannte Mikroschweißverbindungen von Kupfer werden Laserpulse mit grüner Wellenlänge (500 bis 540 nm) eingesetzt, wobei die Einschweißtiefen bei maximal ca. 0,2 mm liegen.

Anwender haben mal neue (glänzende) Kupferteile, mal einige Tage oder Wochen alte (oxidiert) Kupferteile. Daher müssen bei der IR-Laserbearbeitung die Bearbeitungsparameter an das Alter der Werkstücke bzw. an die Oberflächenbeschaffenheit angepasst werden. Außerdem variiert innerhalb einer neu geschliffenen Oberfläche von Kupfer die Einkopplung von IR-Laserstrahlung so stark, dass Schweißpunktunterschiede auftreten.

Es ist demgegenüber die Aufgabe der Erfindung, ein Verfahren und eine Vorrichtung zum Punktschweißen von Werkstücken mittels Laserpulsen mit einer Wellenlänge von 500 bis 540 nm anzugeben, um - insbesondere bei einer Einschweißtiefe von 0,5 bis 1,3 mm - Schweißpunkte mit bei möglichst gleichmäßiger Größe (Einschweißtiefe und Breite) zu erreichen und Spritzer auf der Werkstückoberfläche zu vermeiden und eine von der Werkstückoberfläche möglichst unabhängige Einschweißtiefe und Punktbreite zu erreichen.

Diese Aufgabe wird erfindungsgemäß durch ein Verfahren zum Punktschweißen eines Werkstücks, insbesondere aus Kupfer, Kupferlegierungen, Gold oder Schmuckwerkstoffen, mit den Merkmalen von Anspruch 1 gelöst.

Erfindungsgemäß kann die Leistung der Laserpulse einen rechteck- oder trapezförmigen zeitlichen Pulsverlauf aufweisen. Das erfindungsgemäße Laserschweißverfahren ist für alle Materialen geeignet, die bei grüner Wellenlänge besonders gut absorbieren.

Erfindungsgemäß weist die Leistung der Laserpulse also jeweils einen zeitlichen Pulsverlauf mit einem zeitlich ersten Pulsabschnitt in Form einer ansteigenden Pulsflanke zur Erzeugung einer Schmelztemperatur und anschließend einer Verdampfungstemperatur in dem Werkstück, mit dem Hauptpulsabschnitt als zeitlich zweitem Pulsabschnitt in Form eines hohen Pulsplateaus zur Schmelzbaderzeugung mit einem Dampfkanal in dem Werkstück, mit einem zeitlich dritten Pulsabschnitt in Form einer Pulsflanke, die zunächst senkrecht auf mindestens 3/4 der Leistung am Ende des hohen Pulsplateaus und anschließend flacher abfällt, zur Rückführung des Dampfkanals, und mit einem zeitlich vierten Pulsabschnitt in Form eines tiefen Pulsplateaus, dessen Höhe zwischen 1/3 und 1/4 der Leistung am Ende des hohen Pulsplateaus beträgt, zum Ausschwingen der Schmelze auf. Bei diesem Pulsverlauf weist die Leistung der grünen Laserpulse also keinen rechteckigen oder trapezförmigen zeitlichen Pulsverlauf wie bei den IR-Laserpulsen auf, sondern die Pulsleistung fällt am Ende des hohen Pulsplateaus zunächst senkrecht und anschließend flacher ab, um dadurch den Dampfkanal über einen längeren Zeitraum zurückzubilden, und geht dann in ein tiefes Pulsplateau über, wodurch das Abkühlen und Erstarren der Schmelze, also das Ausschwingen der Schmelze, über einen längeren Zeitraum verlängert wird. Die verzögerte Dampfkanalrückbildung und das verzögerte Ausschwingen der Schmelze wirken Eruptionen der Schmelze entgegen, so dass es zu keinen bzw. weniger Spritzer auf der Werkstückoberfläche kommt. Der Wärmefluss ins Material und zurück wird somit durch einen speziell zeitlich angepassten Leistungsverlauf der Laserpulse bestimmt.

Vorzugsweise ist der Hauptpulsabschnitt als waagerechtes Pulsplateau oder ansteigendes Pulsplateau ausgebildet und bei allen Einschweißtiefen so hoch zu wählen, dass gerade keine Spritzer entstehen. Je länger die Dauer des zweiten Hauptpulsabschnitts desto größer ist die Einschweißtiefe. Die Pulsleistung bzw. Pulsspitzenleistung am Ende des Pulsplateaus ist stark abhängig von der Fokuslage.

Vorzugsweise weist die ansteigende Pulsflanke des ersten Pulsabschnitts am Flankenanfang eine größere Steigung als am Flankenende auf. Der Verlauf folgt damit der natürlichen Energieeinkopplung ins Werkstück. Das heißt, ein steilerer Verlauf würde auch nicht anders ins Material aufgenommen, und die zur Verfügung gestellte Energie wäre vergeudet. Die geringe Steigung am Flankenende führt deshalb zu einer Energieeinsparung des Laserpulses. Da die Absorption beim Phasenwechsel von flüssiger zu dampfförmiger Phase durch die entstehende Mehrfachreflexion im Dampfkanal sprunghaft ansteigt, kann, sobald die Verdampfungstemperatur im Werkstück erreicht worden ist, der zur Erzeugung des Dampfkanals erforderliche weitere Leistungsanstieg verlangsamt oder gerade erfolgen.

Wie Versuche gezeigt haben, ist die Dauer der dritten und der vierten Pulsabschnitte im Wesentlichen unabhängig von der Dauer der vorangegangenen Pulsabschnitte. Stattdessen ist sie abhängig von der Tiefe des Dampfkanals. Die Dauer des dritten Pulsabschnitts beträgt vorzugsweise zwischen ca. 0,3 ms und ca. 4 ms und die Mindestdauer des vierten Pulsabschnitts vorzugsweise zwischen ca. 0,5 ms und ca. 3 ms. Längere Dauern des vierten Pulsabschnittes sind möglich, haben aber keine Auswirkung.

Ganz besonders bevorzugt werden die Laserpulse auf die Werkstückoberfläche jeweils mit einer glockenförmigen Leistungsdichteverteilung abgebildet, die auf der Werkstückoberfläche zu einem allmählichen, also nicht abrupten, von innen nach außen abfallenden Temperaturprofil führt. Dieser sanfte Temperaturabfall nach außen wirkt Eruptionen der Schmelze entgegen, so dass es zu keinen bzw. weniger Spritzer auf der Werkstückoberfläche kommt. Der Dampfkanal formt sich entsprechend der Temperaturverteilung aus und bietet eine gleichmäßige, schräge Absorptionsfläche für das Laserlicht.

Um diese Leistungsdichteverteilung auf der Werkstückoberfläche zu erreichen, werden die in einer Lichtleitfaser zum Werkstück geführten Laserpulse nach ihrem Austritt aus der Lichtleitfaser vorzugsweise auf mindestens den doppelten bis vierfachen Faserdurchmesser aufgeweitet, bevor sie auf die Werkstückoberfläche treffen.
In einer Variante erfolgt die Durchmesseraufweitung der mit Top-Hat-Verteilung aus der Lichtleitfaser ausgetretenen Laserpulse durch entsprechend weites Anordnen des Fokus der Laserpulse über oder unter der Werkstückoberfläche, also durch eine Defokussierung der Laserpulse auf der Werkstückoberfläche, oder durch eine Aufweitungsoptik, die absichtlich eine solche Leistungsdichteverteilung erzeugt, oder durch den Einsatz einer Gradientenindexfaser.
Die Erfindung betrifft in einem weiteren Aspekt auch eine zum Durchführen des erfindungsgemäßen Punktschweißverfahrens geeignete Laserschweißvorrichtung mit den Merkmalen von Anspruch 11. Erfindungsgemäß erzeugt also der Laserstrahlerzeuger (4) Laserpulse (31, 32, 33), deren zeitlicher Pulsverlauf einen zeitlich ersten Pulsabschnitt in Form einer ansteigenden Pulsflanke zur Erzeugung einer Schmelztemperatur und anschließend einer Verdampfungstemperatur in dem Werkstück, den Hauptpulsabschnitt als einen zeitlich zweiten Pulsabschnitt in Form eines hohen Pulsplateaus zur Schmelzbaderzeugung mit einem Dampfkanal in dem Werkstück, einen zeitlich dritten Pulsabschnitt in Form einer Pulsflanke, die zunächst senkrecht auf mindestens 3/4 der Leistung am Ende des hohen Pulsplateaus und anschließend flacher abfällt, zur Rückführung des Dampfkanals, und einen zeitlich vierten Pulsabschnitt in Form eines tiefen Pulsplateaus, dessen Höhe zwischen 1/3 und 1/4 der Leistung am Ende des hohen Pulsplateaus beträgt, zum Ausschwingen der Schmelze aufweist.
Bei einer bevorzugten Ausführungsform ist zum Führen der Laserpulse vom Laserstrahlerzeuger zum Werkstück eine Lichtleitfaser vorgesehen. Die Lichtleitfaser kann beispielsweise eine Stufenindexfaser sein, aus der die Laserpulse mit einem Top-Hat-Profil austreten.

In einer Weiterbildung ist der Lichtleitfaser eine Fokussierungsoptik. z.B. in Form von Linsen, nachgeordnet, die den Durchmesser im Fokus bei Top Hat Verteilung auf höchstens den gleichen oder kleineren Faserdurchmesser abbildet. Der Bestrahldurchmesser wird durch Defokussieren auf mindestens den doppelten bis vierfachen Faserdurchmesser aufgeweitet. In einer alternativen Weiterbildung kann die glockenförmige Verteilung auch durch eine nachgeordnete Fokussierungsoptik, z.B. in Form von Linsen, abgebildet werden, deren Eigenschaft es ist, im Fokus eine gegenüber der Lichtleitfaser veränderte Leistungsdichteverteilung zu erzeugen. Der Bestrahldurchmesser liegt dann zwischen 0,2 und 0,8 mm, und das Werkstück liegt in der Nähe des Fokus.

Weitere Vorteile der Erfindung ergeben sich aus den Ansprüchen, der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a, 1b: eine erfindungsgemäße Laserschweißvorrichtung (Fig. 1 a) zum Punktschweißen mittels Laserpulsen mit einer Wellenlänge von 500 bis 540 nm, sowie die örtliche Leistungsdichteverteilung auf der Werkstückoberfläche (Fig. 1 b);
- Fign. 2a-2c: den zeitlichen Pulsverlauf der Leistung von verschiedenen erfindungsgemäßen Laserpulsen zum Punktschweißen eines Werkstücks mit einer Einschweißtiefe von 0,8 mm (Fig. 2a), 1 mm (Fig. 2b) und 1,3 mm (Fig. 2c); und
- Fig. 3: die verschiedenen Phasen beim erfindungsgemäßen Punktschweißverfahren.

In der folgenden Beschreibung der Zeichnung werden für gleiche bzw. funktionsgleiche Bauteile identische Bezugszeichen verwendet.

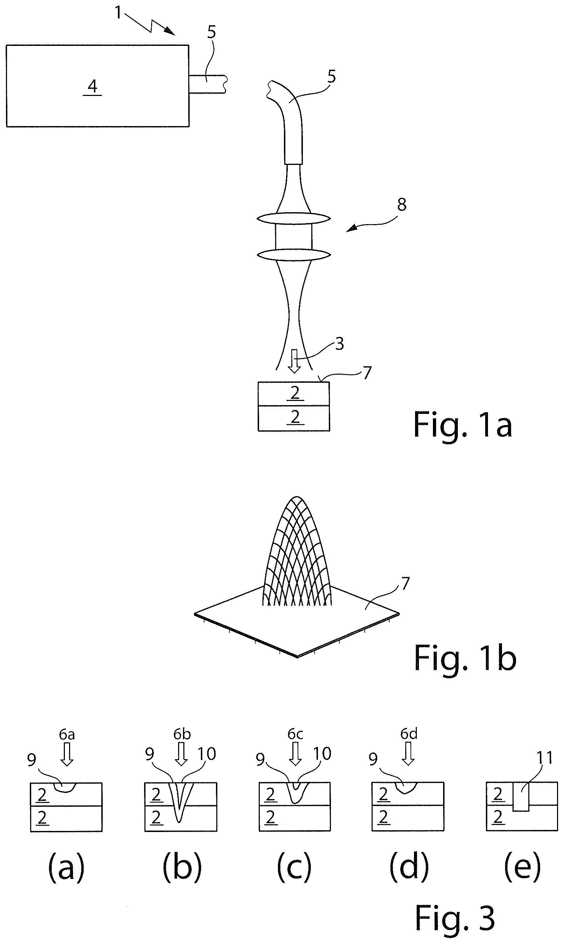

Die in **Fig. 1a** gezeigte Laserschweißvorrichtung **1** dient zum Punktschweißen zweier Werkstücke **2,** insbesondere aus Kupfer, Kupferlegierungen, Gold oder Schmuckwerkstoffen, mittels Laserpulsen **3** mit einer grünen Wellenlänge von 500 bis 540 nm. Die Laserschweißvorrichtung 1 umfasst einen Laserstrahlerzeuger **4** zum Erzeugen der Laserpulse 3 und eine Lichtleiterfaser **5,** die die Laserpulse 3 vom Laserstrahlerzeuger 4 zum Werkstück 2 führt. Der Laserstrahlerzeuger 4 kann ein frequenzverdoppelter Festkörperlaser sein, wie z.B. ein Nd:YAG-Laser mit einer Wellenlänge 1064 nm, der nach der Frequenzverdopplung eine grüne Wellenlänge von 532 nm abstrahlt. Die Lichtleitfaser 5 kann beispielsweise eine Stufenindexfaser sein, aus der die Laserpulse 3 mit einem Top-Hat-Profil austreten. Die Laserpulse 3 haben Pulsdauern zwischen 1 ms und 20 ms, eine Pulsleistung zwischen 0,5 kW und 6 kW und eine mittlere Leistung zwischen Einzelpuls zwischen 0 und 600 W.

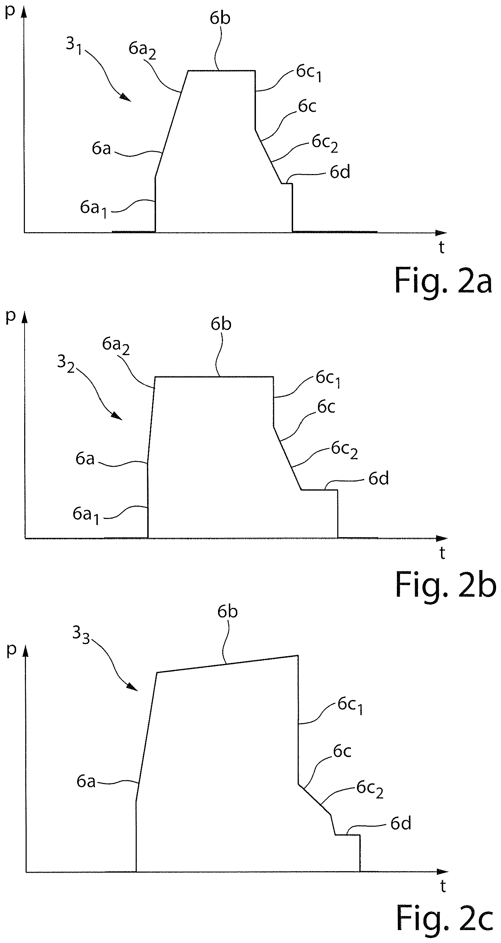

In **Fign. 2a-2c** ist der zeitliche Pulsverlauf der Leistung von unterschiedlichen Laserpulsen **3₁**, **3₂**, **3₃** gezeigt, die von der Laserschweißvorrichtung 1 zum Laserschweißen mit unterschiedlichen Einschweißtiefen erzeugt werden. Fig. 2a zeigt den zeitlichen Pulsverlauf des Laserpulses 3₁ für eine Einschweißtiefe von 0,8 mm, Fig. 2b den zeitlichen Pulsverlauf des Laserpulses 3₂ für eine Einschweißtiefe von 1 mm und Fig. 2c den zeitlichen Pulsverlauf des Laserpulses 3₃ für eine Einschweißtiefe von 1,3 mm.

Der zeitliche Pulsverlauf der Laserpulse 3₁, 3₂, 3₃ umfasst einen zeitlich ersten Pulsabschnitt **6a** in Form einer ansteigenden Pulsflanke zur Erzeugung einer Schmelztemperatur und anschließend einer Verdampfungstemperatur in dem Werkstück 2, einen zeitlich zweiten Pulsabschnitt (Hauptpulsabschnitt) **6b** in Form eines hohen Pulsplateaus zur Schmelzbaderzeugung mit einem Dampfkanal ("Keyhole") in dem Werkstück 2, einen zeitlich dritten Pulsabschnitt **6c** in Form einer Pulsflanke, die zunächst senkrecht auf mindestens 3/4 der Leistung am Ende des hohen Pulsplateaus und anschließend flacher abfällt, zur Rückführung des Dampfkanals, und einen zeitlich vierten Pulsabschnitt **6d** in Form eines tiefen Pulsplateaus, dessen Höhe zwischen 1/3 und 1/4 der Leistung am Ende des hohen Pulsplateaus beträgt, zum Ausschwingen der Schmelze aufweist.

Bei den Laserpulsen 3₁ und 3₂ weist die ansteigende Pulsflanke des ersten Pulsabschnitts 6a zwei Flankenstücke **6a₁**, **6a₂** mit unterschiedlicher Steigung auf, nämlich einen steiler ansteigenden erste Flankenabschnitt 6a₁ zur Erzeugung der Schmelztemperatur und einen weniger steil ansteigenden zweiten Flankenabschnitt 6a₂ zur Erzeugung der Verdampfungstemperatur in dem Werkstück 2 auf. Hingegen weist beim Laserpuls 3₃ die ansteigende Pulsflanke des ersten Pulsabschnitts 6a durchgehend die gleiche Steigung auf.

Die ansteigende Pulsflanke des ersten Pulsabschnitts 6a geht dann in das hohe Pulsplateau des Hauptpulsabschnitts 6b über, und zwar entweder wie bei den Laserpulsen 3₁, 3₂ in ein waagerechtes Plateau oder wie beim Laserpuls 3₃ in ein ansteigendes Plateau. Je länger die Dauer des Hauptpulsabschnitts 6b desto größer ist die Einschweißtiefe. Bevorzugt beträgt die Dauer des Hauptpulsabschnitts zwischen ca. 1 ms und ca. 20 ms. Die Pulsleistung am Ende des hohen Pulsplateaus ist stark abhängig von der Fokuslage und beträgt vorzugsweise zwischen 1600 W und 6000 W.

Bei allen Laserpulsen 3₁, 3₂, 3₃ weist der dritte Pulsabschnitt **6c** einen senkrecht auf mindestens 3/4 der Leistung am Ende des hohen Pulsplateaus abfallenden Flankenabschnitt **6c₁** auf, der dann in einen flacher abfallenden Flankenabschnitt **6c₂** übergeht. Die Dauer des dritten Pulsabschnitts 6c beträgt vorzugsweise zwischen ca. 0,3 ms und ca. 4 ms und die Mindestdauer des vierten Pulsabschnitts 6d vorzugsweise zwischen ca. 0,5 ms und ca. 3 ms. Längere Dauern des vierten Pulsabschnittes 6d sind möglich, haben aber keine Auswirkung.

Wie in **Fig. 1b** gezeigt, werden die Laserpulse 3₁, 3₂, 3₃ auf die Werkstückoberfläche **7** mit einer glockenförmigen Leistungsdichteverteilung abgebildet, die auf der Werkstückoberfläche 7 zu einem allmählichen, also nicht abrupten, von innen nach außen abfallenden Temperaturprofil führt. Dieser sanfte Temperaturabfall nach außen wirkt Eruptionen der Schmelze entgegen, so dass es zu keinen bzw. weniger Spritzer auf der Werkstückoberfläche 7 kommt. Um diese glockenförmige Leistungsdichteverteilung auf der Werkstückoberfläche 7 zu erreichen, werden die Laserpulse 3 defokussiert mit einem auf mindestens den doppelten bis vierfachen Faserdurchmesser aufgeweiteten Durchmesser auf die Werkstückoberfläche 7 abgebildet. Bei einem Faserdurchmesser von ca. 100-200 µm werden die Laserpulse 3 also mit einem Durchmesser von 200-800 µm auf die Werkstückoberfläche 7 abgebildet. Zwischen der Lichtleitfaser 5 und dem Werkstück 2 ist eine Aufweitungsoptik 8 (z.B. eine Linsenoptik mit Kollimator- und Fokussierungslinsen) angeordnet. Die Durchmesseraufweitung der mit Top-Hat-Verteilung aus der Lichtleitfaser 5 ausgetretenen Laserpulse 3 erfolgt durch entsprechend weites Anordnen des Fokus der Laserpulse 3 über der Werkstückoberfläche 7, also durch eine Defokussierung der Laserpulse 3 bezüglich der Werkstückoberfläche 7.

**Fig. 3** zeigt schematisch die verschiedenen Phasen (a) bis (e) des Werkstücks 2 beim erfindungsgemäßen Punktschweißverfahren:

Durch den auftreffenden ersten Pulsabschnitt 6a wird das obere Werkstück 2 von der Werkstückoberfläche 7 her zunächst geschmolzen, so dass eine Schmelze **9** entsteht (Phase (a)), und dann die Schmelze auch zu verdampfen beginnt.

Der zweite Pulsabschnitt 6b bildet in der Schmelze 9 zusätzlich einen Dampfkanal ("Keyhole") **10** aus (Phase (b)) und stellt den eigentlichen Hauptpuls zur Schmelzbaderzeugung dar. Der Dampfkanal 10 erstreckt sich bis in das untere Werkstück 2.

Der Hauptpuls wird durch die senkrechte Pulsflanke 6c₁ des dritten Pulsabschnitts 6c beendet, und die flacher abfallende Pulsflanke 6c₂ des dritten Pulsabschnitts 6c bewirkt, dass sich der Dampfkanal 10 über einen längeren Zeitraum zurückbildet (Phase (c)) und dadurch weniger Eruptionen der Schmelze 9 und weniger Spritzer auftreten.

Durch das tiefe Plateau des vierten Pulsabschnitts 6d wird die Schmelze 9 über einen längeren Zeitraum abgekühlt (Phase (d)), wodurch ein langsames Ausschwingen und Erstarren der Schmelze 9 ohne Spritzer erreicht wird (Phase (e)).

Die Kombination aus örtlicher und zeitlicher Temperaturführung, zusammen mit einer sicheren Aufnahme der Energie in das Werkstück 2 durch die Wellenlänge des Lasers, ermöglicht ein Laserschweißverfahren, welches spritzerfreie und in ihrer Größe reproduzierbare Schweißpunkte **11** erzeugt. Wie Versuche weiter gezeigt haben, sind - im Unterschied zu "infraroten" Schweißpunkten - die "grünen" Schweißpunkte 11 unabhängig von der Beschaffenheit der Werkstückoberfläche und weisen eine hohe Durchmesserkonstanz auf. Beim Laserschweißen bildet sich bei Schmelztemperatur eine andere Oberfläche aus, nämlich beim Schweißen mit IR-Laserstrahlung eine sehr gute und vollkommen glatte Spiegeloberfläche und beim Schweißen mit grüner Laserstrahlung eine weniger gute und gewölbte Spiegeloberfläche, die von der ursprünglichen Oberflächenbeschaffenheit unabhängig ist.

## Patentansprüche

1. Verfahren zum Punktschweißen von Werkstücken (2), insbesondere aus Kupfer, Kupferlegierungen, Gold oder Schmuckwerkstoffen, mittels Laserpulsen (3₁, 3₂, 3₃) mit einer Wellenlänge von 500 bis 540 nm zur Erzeugung von Einschweißtiefen größer 0,5 mm, bevorzugt von 0,8 bis 1,3 mm, besonders bevorzugt größer 1,3 mm, wobei die Laserpulse (3₁, 3₂, 3₃) einen zwischen ca. 1 ms und ca. 20 ms dauernden Hauptpulsabschnitt (6b) mit einer Pulsspitzenleistung zwischen ca. 1600 W und ca. 6000 W aufweisen,
**dadurch gekennzeichnet,**
**dass** die Leistung der Laserpulse (3₁, 3₂, 3₃) jeweils einen zeitlichen Pulsverlauf mit einem zeitlich ersten Pulsabschnitt (6a) in Form einer ansteigenden Pulsflanke zur Erzeugung einer Schmelztemperatur und anschließend einer Verdampfungstemperatur in dem Werkstück (2), mit dem Hauptpulsabschnitt (6b) als zeitlich zweiten Pulsabschnitt zur Schmelzbaderzeugung mit einem Dampfkanal (10) in dem Werkstück (2), mit einem zeitlich dritten Pulsabschnitt (6c) in Form einer Pulsflanke, die zunächst senkrecht auf mindestens 3/4 der Leistung am Ende des Hauptpulsabschnittes (6b) und anschließend flacher abfällt, zur Rückführung des Dampfkanals (10) und mit einem zeitlich vierten Pulsabschnitt (3d) in Form eines tiefen Pulsplateaus, dessen Höhe zwischen 1/3 und 1/4 der Leistung am Ende des Hauptpulsabschnittes (6b) beträgt, zum Ausschwingen der Schmelze (9) aufweist.

2. Verfahren nach Anspruch 1, **dadurch gekennzeichnet, dass** der Hauptpulsabschnitt (6b) als waagerechtes Pulsplateau oder ansteigendes Pulsplateau ausgebildet ist.

3. Laserschweißverfahren nach Anspruch 1 oder 2, **dadurch gekennzeichnet, dass** die ansteigende Pulsflanke des ersten Pulsabschnitts (6a) am Flankenanfang eine größere Steigung als am Flankenende aufweist.

4. Laserschweißverfahren nach einem der vorhergehenden Ansprüche, **dadurch gekennzeichnet, dass** der dritte Pulsabschnitt (6c) zwischen ca. 0,3 ms und ca. 4 ms dauert.

5. Laserschweißverfahren nach einem der vorhergehenden Ansprüche, **dadurch gekennzeichnet, dass** der vierte Pulsabschnitt (6d) eine Mindestdauer zwischen ca. 0,5 ms und ca. 3 ms aufweist.

6. Laserschweißverfahren nach einem der vorhergehenden Ansprüche, **dadurch gekennzeichnet, dass** die Laserpulse (3₁, 3₂, 3₃) jeweils mit einer glockenförmigen örtlichen Leistungsdichteverteilung auf die Werkstückoberfläche (7) abgebildet werden.

7. Laserschweißverfahren nach Anspruch 6, **dadurch gekennzeichnet, dass** die glockenförmige örtliche Leistungsdichte auf der Werkstückoberfläche (7) durch Defokussierung eines Fokus mit Top Hat-Verteilung der Laserpulse (3₁, 3₂, 3₃) erzeugt wird.

8. Laserschweißverfahren nach Anspruch 6, **dadurch gekennzeichnet, dass** die glockenförmige örtliche Leistungsdichte über eine Linsenoptik (8) erzeugt wird, die im Fokus aus einer Top Hat Verteilung der Laserpulse (3₁, 3₂, 3₃) eine Glockenverteilung auf der Werkstückoberfläche (7) erzeugt.

9. Laserschweißverfahren nach einem der vorhergehenden Ansprüche, **dadurch gekennzeichnet, dass** die in einer Lichtleitfaser (5) geführten Laserpulse (3₁, 3₂, 3₃) auf mindestens den doppelten bis vierfachen Faserdurchmesser aufgeweitet werden, bevor sie auf die Werkstückoberfläche (7) treffen.

10. Laserschweißverfahren nach Anspruch 9, **dadurch gekennzeichnet, dass** die Durchmesseraufweitung der aus der Lichtleitfaser (5) ausgetretenen Laserpulse (3₁, 3₂, 3₃) durch entsprechend weites Anordnen des Fokus der Laserpulse (3₁, 3₂, 3₃) über der Werkstückoberfläche (7) erfolgt.

11. Laserschweißvorrichtung (1) zum Laserschweißen von Werkstücken (2), insbesondere aus Kupfer, Kupferlegierungen, Gold oder Schmuckwerkstoffen, mit einem Laserstrahlerzeuger (4) zum Erzeugen von Laserpulsen (3₁, 3₂, 3₃) mit einer Wellenlänge von 500 bis 540 nm und mit einem zwischen ca. 1 ms und ca. 20 ms dauernden Hauptpulsabschnitt (6b), dessen Pulsspitzenleistung zwischen ca. 1600 W und ca. 6000 W beträgt,
**dadurch gekennzeichnet,**
**dass** der Laserstrahlerzeuger (4) Laserpulse (31, 32, 33) erzeugt, wobei die Leistung der Laserpulse (3₁, 3₂, 3₃) jeweils einen zeitlichen Pulsverlauf mit einem zeitlich ersten Pulsabschnitt (6a) in Form einer ansteigenden Pulsflanke zur Erzeugung einer Schmelztemperatur und anschließend einer Verdampfungstemperatur in dem Werkstück (2), mit dem Hauptpulsabschnitt (6b) als einem zeitlich zweiten Pulsabschnitt (6b) in Form eines hohen Pulsplateaus zur Schmelzbaderzeugung mit einem Dampfkanal (10) in dem Werkstück (2), mit einem zeitlich dritten Pulsabschnitt (6c) in Form einer Pulsflanke, die zunächst senkrecht auf mindestens 3/4 der Leistung am Ende des hohen Pulsplateaus und anschließend flacher abfällt, zur Rückführung des Dampfkanals, und mit einem zeitlich vierten Pulsabschnitt (3d) in Form eines tiefen Pulsplateaus, dessen Höhe zwischen 1/3 und 1/4 der Leistung am Ende des hohen Pulsplateaus beträgt, zum Ausschwingen der Schmelze (9) aufweist.

12. Laserschweißvorrichtung nach Anspruch 11, **dadurch gekennzeichnet, dass** eine Lichtleitfaser (5) zum Führen der Laserpulse (3₁, 3₂, 3₃) vom Laserstrahlerzeuger (4) zum Werkstück (2) vorgesehen ist.

13. Laserschweißvorrichtung nach Anspruch 12, **dadurch gekennzeichnet, dass** die Laserpulse (3₁, 3₂, 3₃) defokussiert mit einem auf mindestens den doppelten bis vierfachen Faserdurchmesser aufgeweiteten Durchmesser auf die Werkstückoberfläche (7) treffen.

14. Laserschweißvorrichtung nach Anspruch 13, **dadurch gekennzeichnet, dass** der Lichtleitfaser (5) eine Aufweitungsoptik (8) nachgeordnet ist, die den Durchmesser der auf die Werkstückoberfläche (7) treffenden Laserpulse (3₁, 3₂, 3₃) auf mindestens den doppelten bis vierfachen Faserdurchmesser aufweitet.

## Claims

1. A method for spot welding workpieces (2), particularly made of copper, copper alloys, gold, or jewellery materials, using laser pulses (3₁, 3₂, 3₃) having a wavelength of 500 to 540 nm to generate welding penetration depths greater than 0.5 mm, preferably from 0.8 to 1.3 mm, particularly preferably greater than 1.3 mm, wherein the laser pulses (3₁, 3₂, 3₃) have a main pulse section (6b) lasting between approximately 1 ms and approximately 20 ms and having a pulse peak power between approximately 1600 W and approximately 6000 W,
**characterized in that**
the power of the laser pulses (3₁, 3₂, 3₃) comprises in each case a time pulse curve having a chronologically first pulse section (6a) in the form of a rising pulse flank for generating a melting temperature and subsequently a vaporization temperature in the workpiece (2), having the main pulse section (6b) as the chronologically second pulse section for melt bath generation with a vapor channel (10) in the workpiece (2), having a chronologically third pulse section (6c) in the form of a pulse flank, which initially drops vertically to at least 3/4 of the power at the end of the main pulse section (6b) and subsequently drops more flatly, for reversion of the vapor channel (10), and having a chronologically fourth pulse section (3d) in the form of a low pulse plateau, the level of which is between 1/3 and 1/4 of the power at the end of the main pulse section (6b), for end oscillation of the melt (9).

2. The laser welding method as claimed in claim 1, **characterized in that** the main pulse section (6b) is designed as a horizontal pulse plateau or a rising pulse plateau.

3. The laser welding method as claimed in claim 1 or 2, **characterized in that** the rising pulse flank of the first pulse section (6a) has a greater slope at the beginning of the flank than at the end of the flank.

4. The laser welding method as claimed in any one of the preceding claims, **characterized in that** the third pulse section (6c) lasts between approximately 0.3 ms and approximately 4 ms.

5. The laser welding method as claimed in any one of the preceding claims, **characterized in that** the fourth pulse section (6d) has a minimum duration between approximately 0.5 ms and approximately 3 ms.

6. The laser welding method as claimed in any one of the preceding claims, **characterized in that** the laser pulses (3₁, 3₂, 3₃) are each imaged having a bell-shaped positional power density distribution on the workpiece surface (7).

7. The laser welding method as claimed in claim 6, **characterized in that** the bell-shaped positional power density on the workpiece surface (7) is generated by defocusing of a focus having top-hat distribution of the laser pulses (3₁, 3₂, 3₃).

8. The laser welding method as claimed in claim 6, **characterized in that** the bell-shaped positional power density is generated via a lens optical system (8), which generates a bell distribution on the workpiece surface (7) in the focus from a top-hat distribution of the laser pulses (3₁, 3₂, 3₃).

9. The laser welding method as claimed in any one of the preceding claims, **characterized in that** the laser pulses (3₁, 3₂, 3₃), which are guided in an optical fiber (5), are expanded to at least twice to four times the fiber diameter, before they are incident on the workpiece surface (7).

10. The laser welding method as claimed in claim 9, **characterized in that** the diameter expansion of the laser pulses (3₁, 3₂, 3₃) exiting from the optical fiber (5) is performed by corresponding arrangement of the focus of the laser pulses (3₁, 3₂, 3₃) well above the workpiece surface (7).

11. A laser welding apparatus (1) for laser welding workpieces (2), particularly made of copper, copper alloys, gold, or jewellery materials, comprising a laser beam generator (4) for generating laser pulses (3₁, 3₂, 3₃) having a wavelength of 500 to 540 nm and having a main pulse section (6b), which lasts between approximately 1 ms and approximately 20 ms, and the pulse peak power of which is between approximately 1600 W and approximately 6000 W,
**characterized in that**
the laser beam generator (4) generates laser pulses (3₁, 3₂, 3₃), wherein the power of the laser pulses (3₁, 3₂, 3₃) comprises in each case a time pulse curve having a chronologically first pulse section (6a) in the form of a rising pulse flank for generating a melting temperature and subsequently a vaporization temperature in the workpiece (2), having the main pulse section (6b) as a chronologically second pulse section (6b) in the form of a high pulse plateau for melt bath generation with a vapor channel (10) in the workpiece (2), having a chronologically third pulse section (6c) in the form of a pulse flank, which initially drops vertically to at least 3/4 of the power at the end of the high pulse plateau and subsequently drops more flatly, for reversion of the vapor channel, and having a chronologically fourth pulse section (3d) in the form of a low pulse plateau, the level of which is between 1/3 and 1/4 of the power at the end of the high pulse plateau, for end oscillation of the melt (9).

12. The laser welding apparatus as claimed in claim 11, **characterized in that** an optical fiber (5) is provided for guiding the laser pulses (3₁, 3₂, 3₃) from the laser beam generator (4) to the workpiece (2).

13. The laser welding apparatus as claimed in claim 12, **characterized in that** the laser pulses (3₁, 3₂, 3₃) incident on the workpiece surface (7) are defocused having a diameter expanded to at least twice to four times the fiber diameter.

14. The laser welding apparatus as claimed in claim 13, **characterized in that** an expansion optical system (8) is arranged downstream of the optical fiber (5), which expands the diameter of the laser pulses (3₁, 3₂, 3₃) incident on the workpiece surface (7) to at least twice to four times the fiber diameter.

## Revendications

1. Procédé de soudage par points de pièces (2), en particulier en cuivre, alliages de cuivre, or ou matériaux d'orfèvrerie, au moyen d'impulsions laser (3₁, 3₂, 3₃) d'une longueur d'onde de 500 à 540 nm pour produire des profondeurs de soudure supérieures à 0,5 mm, de préférence de 0,8 à 1,3 mm, de façon particulièrement préférée supérieures à 1,3 mm, dans lequel les impulsions laser (3₁, 3₂, 3₃) présentent une partie principale d'impulsion (6b) d'une durée comprise entre environ 1 ms et environ 20 ms et d'une puissance de crête d'impulsion comprise entre environ 1600 W et environ 6000 W,
**caractérisé en ce**
**que** la puissance des impulsions laser (3₁, 3₂, 3₃) présente chaque fois une courbe d'impulsion dans le temps avec une première partie d'impulsion (6a) dans le temps sous la forme d'un flanc d'impulsion ascendant, pour produire une température de fusion puis une température d'évaporation dans la pièce (2), avec la partie principale d'impulsion (6b) comme deuxième partie d'impulsion dans le temps, pour produire un bain de fusion avec un canal de vapeur (10) dans la pièce (2), avec une troisième partie d'impulsion (6c) dans le temps sous la forme d'un flanc d'impulsion qui chute d'abord verticalement à au moins 3/4 de la puissance à la fin de la partie principale d'impulsion (6b) et ensuite de manière plus plate, pour le retour du canal de vapeur (10), et avec une quatrième partie d'impulsion (3d) dans le temps sous la forme d'un plateau d'impulsion bas, dont la hauteur est comprise entre 1/3 et 1/4 de la puissance à la fin de la partie principale d'impulsion (6b) pour la relaxation de la matière fondue (9).

2. Procédé selon la revendication 1, **caractérisé en ce que** la partie principale d'impulsion (6b) se présente sous la forme d'un plateau d'impulsion horizontal ou d'un plateau d'impulsion ascendant.

3. Procédé de soudage au laser selon la revendication 1 ou 2, **caractérisé en ce que** le flanc d'impulsion ascendant de la première partie d'impulsion (6a) présente une plus grande pente au début de l'impulsion qu'à la fin de l'impulsion.

4. Procédé de soudage au laser selon l'une des revendications précédentes, **caractérisé en ce que** la troisième partie d'impulsion (6c) dure entre environ 0,3 ms et environ 4 ms.

5. Procédé de soudage au laser selon l'une des revendications précédentes, **caractérisé en ce que** la quatrième partie d'impulsion (6d) présente une durée minimale comprise entre environ 0,5 ms et environ 3 ms.

6. Procédé de soudage au laser selon l'une des revendications précédentes, **caractérisé en ce que** les impulsions laser (3₁, 3₂, 3₃) sont reproduites chaque fois avec une distribution de densité de puissance locale en forme de cloche sur la surface de pièce (7).

7. Procédé de soudage au laser selon la revendication 6, **caractérisé en ce que** la densité de puissance locale en forme de cloche sur la surface de pièce (7) est produite par défocalisation d'un foyer avec distribution en chapeau haut de forme des impulsions laser (3₁, 3₂, 3₃).

8. Procédé de soudage au laser selon la revendication 6, **caractérisé en ce que** la densité de puissance locale en forme de cloche est produite par une optique à lentilles (8) qui, à partir d'une distribution en chapeau haut de forme des impulsions laser (3₁, 3₂, 3₃), produit au foyer une distribution en cloche sur la surface de pièce (7).

9. Procédé de soudage au laser selon l'une des revendications précédentes, **caractérisé en ce que** les impulsions laser (3₁, 3₂, 3₃) guidées dans une fibre conductrice de lumière (5) sont élargies à au moins deux à quatre fois le diamètre de la fibre avant qu'elles n'atteignent la surface de pièce (7).

10. Procédé de soudage au laser selon la revendication 9, **caractérisé en ce que** l'élargissement du diamètre des impulsions laser (3₁, 3₂, 3₃) issues de la fibre conductrice de lumière (5) est réalisé par disposition à distance correspondante du foyer des impulsions laser (3₁, 3₂, 3₃) au-dessus de la surface de pièce (7).

11. Dispositif de soudage au laser (1) pour le soudage au laser de pièces (2), en particulier en cuivre, alliages de cuivre, or ou matériaux d'orfèvrerie, avec un générateur de faisceau laser (4) pour générer des impulsions laser (3₁, 3₂, 3₃) d'une longueur d'onde de 500 à 540 nm et ayant une partie principale d'impulsion (6b) d'une durée comprise entre environ 1 ms et environ 20 ms dont la puissance de crête d'impulsion est comprise entre environ 1600 W et environ 6000 W,
**caractérisé en ce**
**que** le générateur de faisceau laser (4) génère des impulsions laser (3₁, 3₂, 3₃), la puissance des impulsions laser (3₁, 3₂, 3₃) présentant chaque fois une courbe d'impulsion dans le temps avec une première partie d'impulsion (6a) dans le temps sous la forme d'un flanc d'impulsion ascendant, pour produire une température de fusion puis une température d'évaporation dans la pièce (2), avec la partie principale d'impulsion (6b) comme deuxième partie d'impulsion dans le temps sous la forme d'un plateau d'impulsion élevé, pour produire un bain de fusion avec un canal de vapeur (10) dans la pièce (2), avec une troisième partie d'impulsion (6c) dans le temps sous la forme d'un flanc d'impulsion qui chute d'abord verticalement à au moins 3/4 de la puissance à la fin du plateau d'impulsion élevé et ensuite de manière plus plate, pour le retour du canal de vapeur (10), et avec une quatrième partie d'impulsion (3d) dans le temps sous la forme d'un plateau d'impulsion bas, dont la hauteur est comprise entre 1/3 et 1/4 de la puissance à la fin du plateau d'impulsion élevé pour la relaxation de la matière fondue (9).

12. Dispositif de soudage au laser selon la revendication 11, **caractérisé en ce qu'**une fibre conductrice de lumière (5) est prévue pour guider les impulsions laser (3₁, 3₂, 3₃) du générateur de faisceau laser (4) vers la pièce (2).

13. Dispositif de soudage au laser selon la revendication 12, **caractérisé en ce que** les impulsions laser (3₁, 3₂, 3₃) sont défocalisées et atteignent la surface de pièce (7) avec un diamètre élargi à au moins deux à quatre fois le diamètre de la fibre.

14. Dispositif de soudage au laser selon la revendication 13, **caractérisé en ce qu'**à la suite de la fibre conductrice de lumière (5) est disposée une optique d'élargissement (8) qui élargit le diamètre des impulsions laser (3₁, 3₂, 3₃) atteignant la surface de pièce (7) à au moins deux à quatre fois le diamètre de la fibre.
